# EUROPEAN PATENT SPECIFICATION

(11) **EP 3 999 305 B1**
(45) Date of publication and mention of the grant of the patent: **04.09.2024**
(21) Application number: 20941521.5
(22) Date of filing: 22.09.2020
(51) Int. Cl.: B29C 45/00, B29C 45/56, B29B 11/00, B29C 45/26, B29B 11/08, B29C 33/74, B29C 33/38

(54) **MOLD ASSEMBLY FOR THE PRODUCTION OF PET PREFORM AND SIMILAR PLASTIC PRODUCTS**
FORMANORDNUNG FÜR DIE HERSTELLUNG VON PET-VORFORMLINGEN UND ÄHNLICHEN KUNSTSTOFFPRODUKTEN
ENSEMBLE MOULE POUR LA PRODUCTION D'UNE PRÉFORME DE PET ET PRODUITS EN PLASTIQUE SIMILAIRES

(43) Date of publication of application: 25.05.2022
(73) Proprietor: FR MAKINA VE MÜHENDISLIK ANONIM SIRKETI, Bursa (TR)
(72) Inventor: AKAR, Ramazan, Inegöl/Bursa (TR)
(74) Representative: Zaboliene, Reda
(86) International application number: PCT/TR2020/050870
(87) International publication number: WO 2022/066108

(56) References cited:
- WO-A1-2012/061938
- US-A- 5 470 221
- US-A1- 2004 145 082

## Description

### Technical Field

The invention relates to a mold assembly used in the production of plastic injection pet preforms and similar plastic products.

The invention espcially relates to a mold assembly that enables the abrasion problem on the conical locking surfaces of the plastic injection mold parts to be eliminated in pet preform production.

### Prior Art

PET (POLYETHYLENE TERAFTARAT), one of the basic materials of the plastic industry, is a raw material generally used in the production of beverage bottles such as soft drinks. Bottle production is generally a production method that includes a two-step process method, injection and then blow molding, due to speed, volume, logistics and economic factors. The basis of the two-step process method is based on the production of a preform with a structure similar to a test tube called PET preform in the injection process, and the principle of forming the PET preforms in cold mold with the help of compressed air and pushing piston in the blow molding machine by subjecting the PET preforms to a thermal process again.

In the current technique, abrasions occur on the conical locking surfaces of plastic injection mold parts in the injection process. The aforementioned abrasions on the conical locking surfaces of the mold, cause a deformation called burr in the PET preform obtained as a preform after the injection process. There are quality problems in the production of bottles produced from PET preform due to the aforementioned deformities. Although the abrasions that form these deformities occur only on the conical locking surfaces, all the parts that compose the mold, are produced completely again by machining methods and subsequent heat treatments. This causes high costs in the manufacture of each new part due to the consumption of raw materials, labor, energy and time. Therefore, in the state of the art, there has been a need for embodiments that enable the elimination of abrasions on the conical locking surfaces of the mold parts.

The document numbered EP1998945B1 can be shown as an example of the state of the art in the research conducted in the literature. Said document relates to blow injection molding tool. This device includes at least one mold that can be used for injection molding a thin-walled hollow preform that can be formed into a larger volume hollow body by blow molding. With the said mold structure, it is ensured to obtain a preform that allows the weight of thin-walled parts such as bottles to be reduced to a maximum while preserving their mechanical properties. The said mold generally includes an opposing mold that defines the inner surface of the cavity, a core placed in the cavity and spaced from this inner surface, a preform trail between the inner surface of the opposing mold and the core to receive the melted material, at least two main preferred flow channels (TAK) optionally includes at least two secondary preferred flow channels (TAK). However, it is not possible to eliminate the abrasions experienced on the mold parts with the said mold structure.

Another application numbered US20040145082A1 discloses an Injection molding method and apparatus for ejecting a molded plastic article from a mold. A lifting structure and/or step is provided with a lifting portion which is configured to contact substantially one half of an end of the molded plastic article along a line substantially perpendicular to the lifting direction. A tapered surface forms an acute angle with respect to the lifting portion to form a tight seal with the mold. The application numbered WO2012061938A1 teaches a split mold insert for forming a neck portion of a preform and the mold stack incorporating same. The neck ring comprises a molding surface for defining a portion of a molded article to be molded; a first male taper projecting from a body of the neck ring; and a second male taper located proximate to an outer lateral periphery of the body of the neck ring ; wherein the first male taper and the second male taper are configured to cooperate with respective female tapers that are associated with a cavity flange. However, these applications are silent about the conical jaw rings located inside of the jaw channel preventing the abrasion of the locking ring.

As a result, the existence of the above problems and insufficiency of existing solutions made it necessary to make an improvement in the related technical field.

### The object of the Invention

The present invention relates to a mold assembly for the production of PET preforms and similar plastic products, which eliminate the above-mentioned disadvantages and bring new advantages to the relevant technical field.

The main object of the invention is to obtain a mold assembly that eliminates the abrasion problem on the conical locking surfaces of plastic injection mold parts in pet preform production.

The object of the invention is to prevent the need to completely replace the locking ring, jaw or cavity in the abrasion that occurs during the combination of the jaw, cavity and locking ring, which is on the mold during the production of PET preforms, conical jaw ring, core ring and cavity ring are integrated to the joining surfaces to ensure that the abrasions that will occur over time are on the rings that can be changed. Another object of the invention is, thanks to make fillet welding by applying suitable weld seams to the worn conical surfaces of the jaw, cavity, locking ring and core by laser welding machine or other welding methods, it is eliminated the need to replace the locking ring, jaw or cavity altogether in the abrasions that occur during the combination of the jaw with the cavity and the locking ring.

Another object of the invention is to eliminate the consumption of raw materials, labor, energy and time caused by the re-produced molds used in the production of PET preforms due to abrasion.

In order to fulfill all the purposes stated above and that can be derived from the detailed description, the invention relates to the mold assembly used in the production of plastic injection pet preforms and similar plastic products. The invention is characterized by comprising as follows;
- the jaw, which is located on the injection mold to form the mouth of the PET preform, including circular bulge, on its lower surface, extending upwards and downwards in accordance with the mouth structure of the PET preform, it further includes jaw channel in the form of an inward recess around the outer edge of the bulges,
- the first conical jaw ring located in the jaw channel on one side of the jaw and whose outer surface is conical form,
- the second conical jaw ring located inside the jaw channel on the other side of the jaw and whose outer surface is conical form,
- the cavity, which is locked to the side of the jaw wherein the first conical jaw ring is on said side, by means of the connected cavity ring on the cavity channel located on its upper surface and forming the outer wall of the PET preform,
- the locking ring, which is locked to the side of the jaw wherein the second conical jaw ring is on said side, by means of the core ring connected to the locking channel located on its upper surface,
- the core that is connected on the locking ring and forms the inner wall of the PET preform.

The structural and characteristic features and all the advantages of the invention will be understood more clearly thanks to the figures given below and the detailed description written by making references to these figures. Therefore, the evaluation should be made by taking these figures and detailed explanations into consideration.

### Figures to Help Understand the Invention

**Figure 1****,** is the cross-sectional view of the mold assembly of the invention.
**Figure 2****,** is the disassembled view of the jaw of the mold assembly, the first conical jaw ring and the second conical jaw ring.
**Figure 3a****,** is a perspective view of the jaw of the mold assembly, the first conical jaw ring and the second conical jaw ring in assembled form.
**Figure 3b****,** is the front view of the jaw of the mold assembly, the first conical jaw ring and the second conical jaw ring in assembled form.
**Figure 4****,** is the disassembled view of the cavity and cavity ring of the mold assembly.
**Figure 5a****,** is the perspective view of the cavity and the cavity ring of the mold assembly in assembled form.
**Figure 5b****,** is the sectional view of the cavity and the cavity ring of the mold assembly in assembled form.
**Figure 6****,** is the disassembled view of the locking ring and core ring of the mold assembly.
**Figure 7a****,** is a perspective view of the locking ring and core ring of the mold assembly in assembled form.
**Figure 7b****,** is the sectional view of the locking ring and the core ring of the mold assembly in assembled form.
**Figure 8a****,** the top perspective view of the jaw of the mold assembly in the alternative embodiment of the present invention.
**Figure 8b****,** the bottom perspective view of the jaw of the mold assembly in the alternative embodiment of the invention.
**Figure 9****,** is the perspective view of the cavity of the mold assembly in the alternative embodiment of the invention.
**Figure 10****,** is the perspective view of the locking ring of the mold assembly in the alternative embodiment of the invention.
**Figure 11****,** is the sectional view of the mold assembly in the alternative embodiment of the invention.

### Explanation of the Part References

**10.** Jaw
**11.** Bulge
**12.** Jaw channel
**13.** Jaw welding surface
**20.** Cavity
**21.** Cavity channel
**22.** Cavity welding surface
**30.** Core
**40.** Locking ring
**41.** Locking channel
**42.** Locking welding surface
**50.** Cavity ring
**60.** Core ring
**70.** First conical jaw ring
**80.** Second conical jaw ring

### Detailed Description of the Invention

In this detailed description, the preferred alternatives of the inventive mold assembly are explained only for a better understanding of the subject and without any restrictive effect.

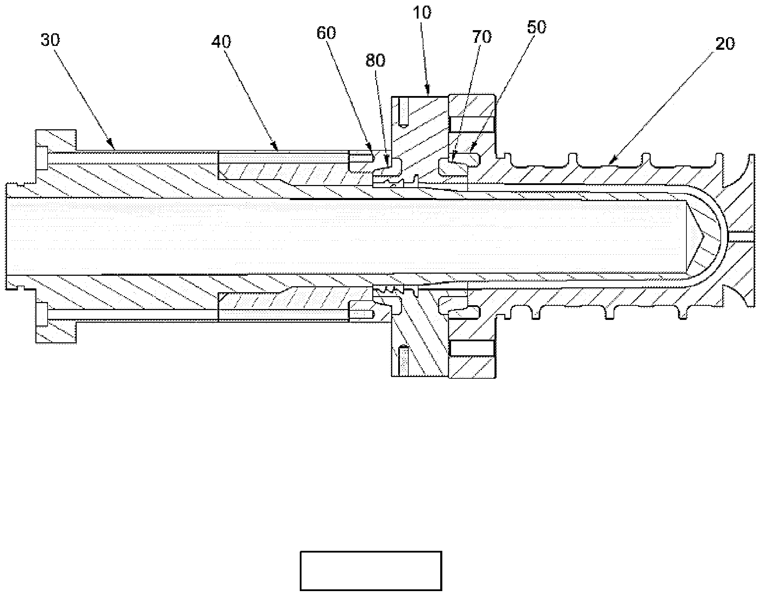

In Figure 1, the sectional view of the mold assembly subject to the invention is given. Accordingly, the mold assembly generally comprises the jaw (10) that forms the mouth of the PET preform on the injection mold and has the first conical jaw ring (70) on its one side and the second conical jaw ring (80) on its other side, the cavity (20) which is locked to the side of the jaw (10) with the first conical jaw ring (70) by means of the cavity ring (50) connected to its upper surface and forming the outer wall of the PET preform, the locking ring (40) that is locked to the side of the jaw (10) with the second conical jaw ring (80) by means of the core ring (60) connected to its upper surface, the core (30) that is connected to the locking ring (40) and forms the inner wall of the PET preform.

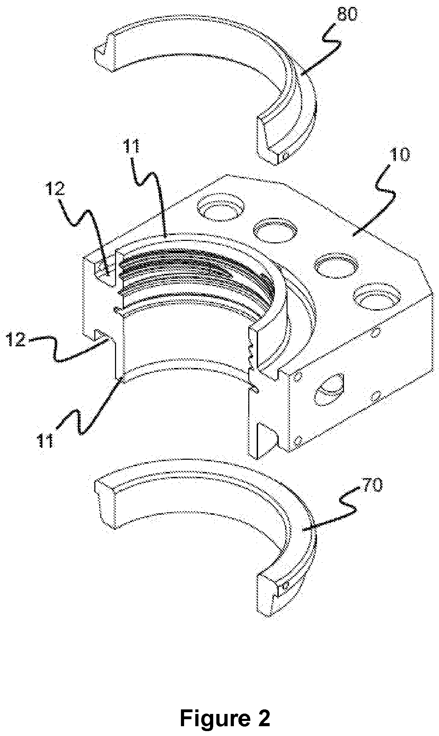

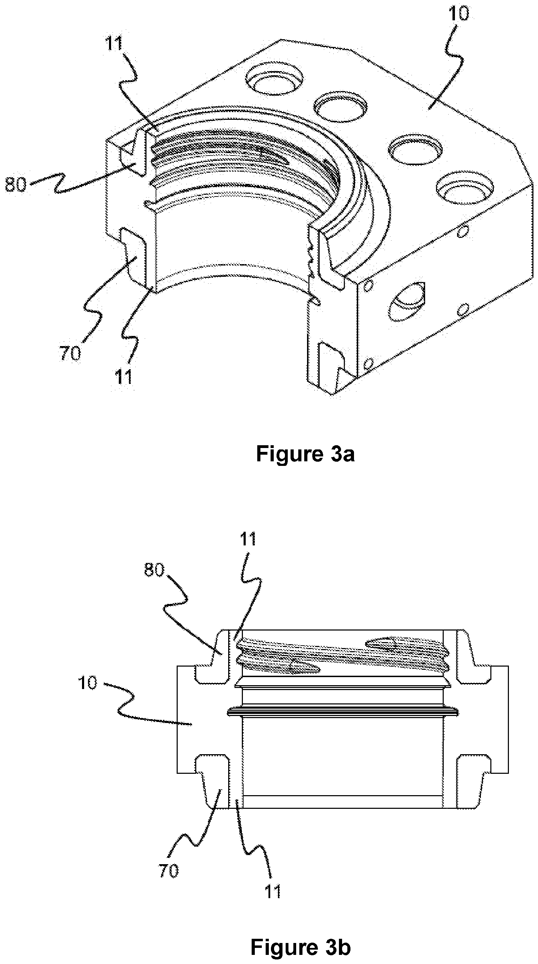

The jaw (10) is a movable structure located on the injection mold to form the mouth of the PET preform. As seen in Figure 2, on the lower and upper surfaces of the jaw (10), there is a bulge (11) extending upwards and downwards in a circular form in accordance with the mouth structure of the PET preform. The jaw channel (12) in the form of an inward recess is opened around the outer edge of the bulges (11) extending upwards and downwards on the lower and upper surfaces of the jaw (10). The first conical jaw ring (70) and the second conical jaw ring (80), which have a circular and external conical form in accordance with the jaw channel (12), are embedded in the jaw channels (12) as seen in Figures 3a and 3b.

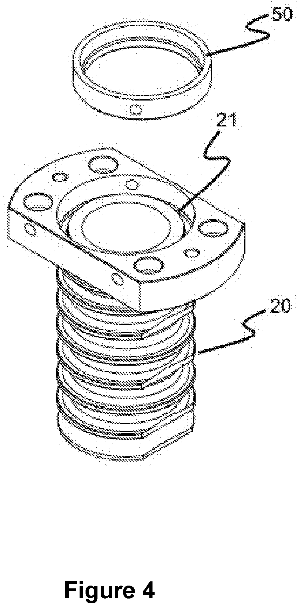

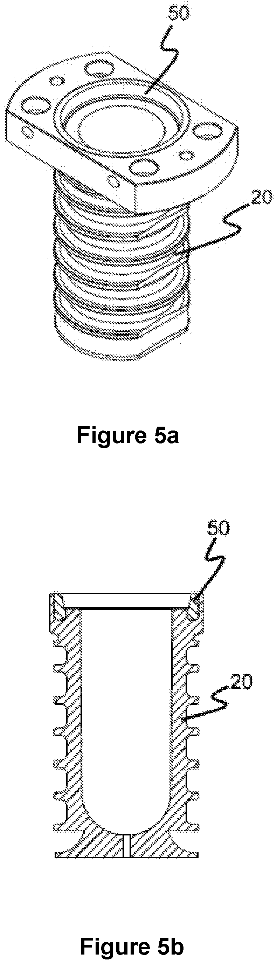

As seen in Figure 4, a cavity channel (21) is opened on the upper surface of the cavity (20) forming the outer wall of the PET preform and, as seen in figures 5a and 5b, a cavity ring (50) with a conical inner surface is embedded inside the cavity channel (21).

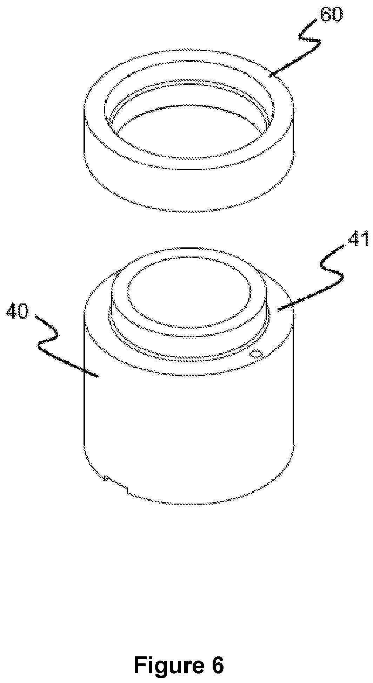

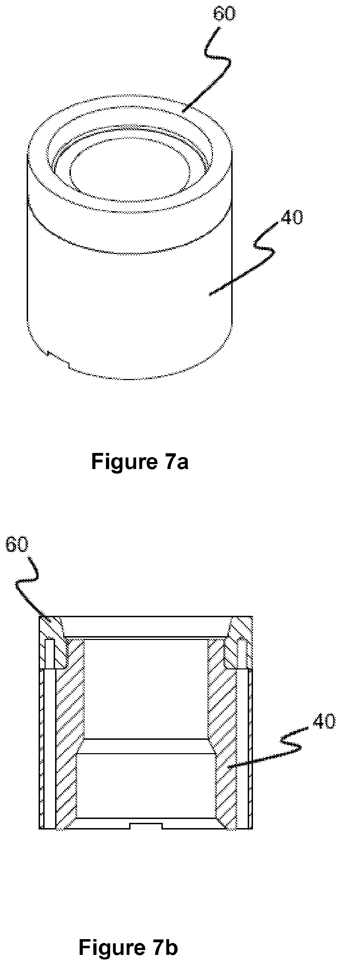

As can be seen in Figure 6, a locking channel (41) is formed on the upper surface of the locking ring (40), which is in circular form, and the core ring (60) with a conical inner surface is connected on the said locking channel (41) as seen in figures 7a and 7b. The locking ring (40) ensures the fixation of the core (30), which is placed in the cavity (20) passing through the jaw (10) to form the inner wall of the PET preform, on the jaw (10).

*The assembly of the mold assembly subject to the invention is carried out* as *follows.*

To form the mouth part of the PET preform, the jaw (10) which is located on the injection mold and has the first conical jaw ring (70) on one side and the second conical jaw ring (80) on the other side and the cavity ring (50) that is in connection with the upper surface of the cavity (20), is placed jaw (10) side on which the first conical jaw ring (70) is positioned. The cavity (20) forming the outer wall of the PET preform is locked to the jaw (10) by bearing the inner surface of the first conical jaw ring (70) in conical form inside the conical shaped cavity ring (50).

The locking ring (40) in connection with the core ring (60) from its upper surface, is placed on the side of the jaw (10) with the second conical jaw ring (80). The locking ring (40) is locked to the jaw (10) by bearing the inner surface of the second conical jaw ring (80) with a conical outer surface inside the core ring (60) in conical form. The mold assembly is made ready for use by connecting the core (30) forming the inner wall of the PET preform onto the locking ring (40).

During the production of PET preform, the need to completely replace the locking ring (40), jaw (10) or cavity (20) is prevented during the abrasion that occurs during the combination of the jaw (10) with the cavity (20) and the locking ring (40). By replacing the cavity ring (50), the core ring (60), the first conical jaw ring (70) and the second conical jaw ring (80), the abrasion problem has been eliminated.

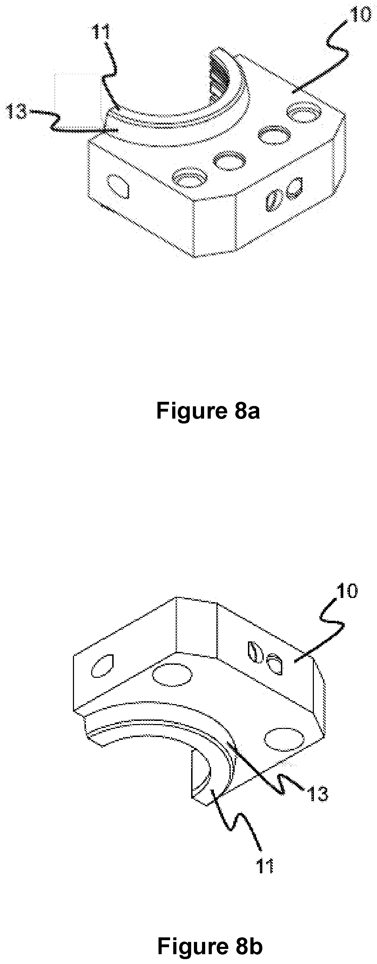

In the alternative embodiment of the invention, in order to prevent the abrasion that occurs during the combination of the jaw (10) with the cavity (20) and the locking ring (40), there are no jaw channels (12) around the outer edge of the bulges (11) on the lower and upper surfaces of the jaw (10) in accordance with the mouth structure of the PET preform. Filler welding is performed on the outer surface of the said bulges (11) by applying appropriate welding seams with laser welding machine or other welding methods as seen in Figures 8a and 8b. The weld seams thrown in sufficient thickness are then processed on suitable machining benches and the outer surfaces of the bulges (11) are turned into conical form, and the desired surface quality is achieved by obtaining the jaw welding surface (13) on the outer surface of the bulges (11). The same process is applied for the cavity (20) and the locking ring (40).

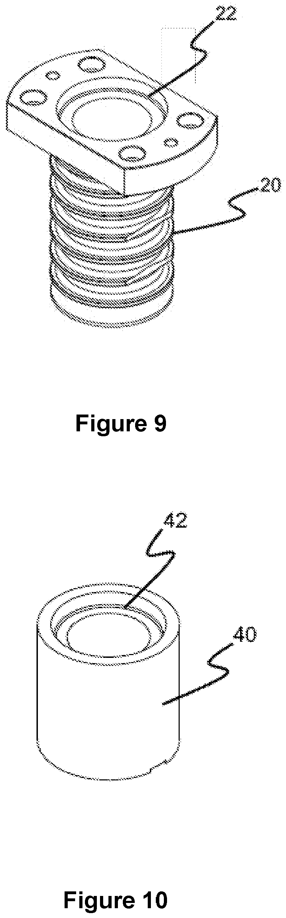

There is no cavity channel (21) on the upper surface of the cavity (20). Fill welding is performed on the upper inner surface of the cavity (20) by applying appropriate welding seams with laser welding machine or other welding methods as seen in Figure 9. The weld seams thrown in sufficient thickness are then processed on suitable machining benches and the upper inner surface of the cavity (20) is turned into a conical form, and the cavity welding surface (22) is obtained on the upper inner surface of the cavity (20) and the desired surface quality is achieved.

There is no locking channel (41) on the upper surface of the locking ring (40). Filler welding is performed on the upper inner surface of the locking ring (40) by applying appropriate weld seams by laser welding machine or other welding methods as seen in Figure 10. The weld seams thrown in sufficient thickness are then processed on suitable machining machines and the upper inner surface of the locking ring (40) is brought into a conical form, and the desired surface quality is achieved by obtaining the locking welding surface (42) on the upper inner surface of the locking ring (40).

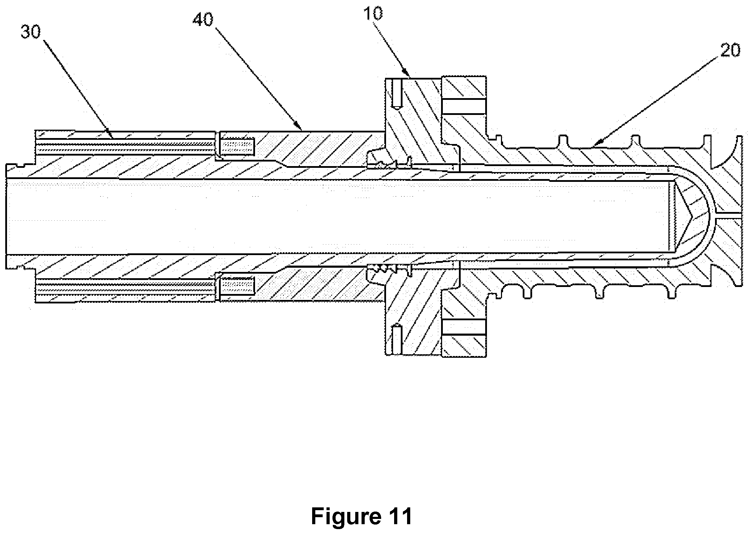

In the alternative embodiment of the invention mentioned above, the cavity (20) is placed on one side of the jaw (10) and the locking ring (40) on the other side, in order to fix the jaw (10), the cavity (20) and the locking ring (40) to each other, as seen in Figure 11. In the meantime, the jaw welding surface (13) located on the outer surface of the protrusion (11) on one side of the jaw (10) is locked to the conical cavity welding surface (22) formed on the inner surface of the cavity (20) and the jaw welding surface (13) located on the outer surface of the protrusion (11) on the other side of the jaw (10) is also locked by engaging the conical shaped locking welding surface (42) formed on the inner surface of the locking ring (40) by engaging and the mold assembly is made ready for use.

## Claims

1. Mold assembly used in the plastic injection pet preform production industry, comprising
- the jaw (10), which is located on the injection mold to form the mouth of the PET preform, including circular bulge (11), on its lower surface, extending upwards and downwards in accordance with the mouth structure of the PET preform, it further includes jaw channel (12) in the form of an inward recess around the outer edge of the bulges (11), **characterized by**,
- the first conical jaw ring (70) located in the jaw channel (12) on one side of the jaw (10) and whose outer surface is conical form,
- The second conical jaw ring (80) located inside the jaw channel (12) on the other side of the jaw (10) and whose outer surface is conical form,
- The cavity (20), which is locked to the side of the jaw (10) wherein the first conical jaw ring (70) is on said side, by means of the connected cavity ring (50) on the cavity channel (21) located on its upper surface and forming the outer wall of the PET preform,
- The locking ring (40), which is locked to the side of the jaw (10) wherein the second conical jaw ring (80) is on said side, by means of the core ring (60) connected to the locking channel (41) located on its upper surface,
- The core (30) that is connected on the locking ring (40) and forms the inner wall of the PET preform.

2. Mold assembly according to Claim 1, **characterized in that**; it comprises the first conical jaw ring (70) having conical outer surface, that enables the cavity (20) to be locked to the jaw (10) by being embedded in the cavity ring (50) with a conical inner surface.

3. Mold assembly according to Claim 1, **characterized in that**; it comprises the second conical jaw ring (80) having conical outer surface, that enables the locking ring (40) to be locked to the jaw (10) by being embedded in the core ring (60) with a conical inner surface.

4. Mold assembly according to Claim 1, **characterized in that**; it comprises jaw welding surface (13) with conical form, which is formed on the outer surface of the bulges (11) by means of the filler welding processed in machining machines and applied to the outer surface of the bulges (11) by laser welding machine or other welding methods by making suitable welding seams, in order to ensure that the said jaw (10) is connected to each other with the locking ring (40).

5. Mold assembly according to Claim 1, **characterized in that**; it comprises locking welding surface (42) with conical form, which is formed on the upper-inner surface of the locking ring (40) by means of the filler welding processed in machining machines and applied to the upper-inner surface of the locking ring (40) by laser welding machine or other welding methods by making suitable welding seams, in order to ensure that the said jaw (10) is connected to each other with the locking ring (40).

6. Mold assembly according to Claim 1, **characterized in that**; it comprises cavity welding surface (22) with conical form, which is formed on the upper-inner surface of the cavity (20) by means of the filler welding processed in machining machines and applied to the upper-inner surface of the cavity (20) by laser welding machine or other welding methods by making suitable welding seams, in order to ensure that the said jaw (10) is connected to each other with the cavity (20).

## Patentansprüche

1. Formbaugruppe für die Herstellung von PET-Vorformlingen im Kunststoffspritzgussverfahren, bestehend aus
- die Backe (10), die sich auf der Spritzgussform befindet, um die Mündung des PET-Vorformlings zu bilden, umfasst eine kreisförmige Ausbuchtung (11) auf ihrer Unterseite, die sich entsprechend der Mündungsstruktur des PET-Vorformlings nach oben und unten erstreckt, und umfasst außerdem einen Backenkanal (12) in Form einer nach innen gerichteter Vertiefung um die Außenkante der Ausbuchtung (11), **gekennzeichnet durch**,
- der erste konische Backenring (70), der sich im Backenkanal (12) auf einer Seite der Backe (10) befindet und dessen Außenfläche konisch geformt ist,
- Der zweite konische Backenring (80), der sich innerhalb des Backenkanals (12) auf der anderen Seite der Backe (10) befindet und dessen Außenfläche konisch geformt ist.
- Der Hohlraum (20), der an der Seite der Backe (10) befestigt ist, an der sich der erste konische Backenring (70) auf dieser Seite befindet, ist mittels des verbundenen Hohlraumrings (50) am Hohlraumkanal (21) befestigt, der sich auf seiner Oberseite befindet und die Außenwand des PET-Vorformlings bildet,
- Der Verriegelungsring (40), der an der Seite der Backe (10) verriegelt ist, an der sich der zweite konische Backenring (80) befindet, mittels des Kernrings (60), der mit dem Verriegelungskanal (41) verbunden ist, der sich auf seiner Oberseite befindet,
- Der Kern (30), der mit dem Verschlussring (40) verbunden ist und die Innenwand des PET-Vorformlings bildet.

2. Formanordnung nach Anspruch 1, **dadurch gekennzeichnet, dass** sie den ersten konischen Backenring (70) mit konischer Außenfläche umfasst, der es ermöglicht, den Hohlraum (20) an der Backe (10) zu verriegeln, indem er in den Hohlraumring (50) mit konischer Innenfläche eingebettet ist.

3. Formanordnung nach Anspruch 1, **dadurch gekennzeichnet, dass** sie den zweiten konischen Backenring (80) mit konischer Außenfläche umfasst, der es ermöglicht, den Verriegelungsring (40) an der Backe (10) zu verriegeln, indem er in den Kernring (60) mit konischer Innenfläche eingebettet wird.

4. Formanordnung nach Anspruch 1, **dadurch gekennzeichnet, dass** sie eine Backenschweißfläche (13) mit konischer Form umfasst, die auf der Außenfläche der Ausbuchtungen (11) mittels Füllschweißen gebildet ist, das in Bearbeitungsmaschinen verarbeitet wird und durch Laserschweißen oder andere Schweißverfahren durch Anbringen geeigneter Schweißnähte auf der Außenfläche der Ausbuchtung (11) aufgebracht wird, um sicherzustellen, dass die Backe (10) mit dem Verriegelungsring (40) miteinander verbunden ist.

5. Formanordnung nach Anspruch 1, **dadurch gekennzeichnet, dass** sie eine Verriegelungsschweißfläche (42) mit konischer Form umfasst, die auf der oberen Innenfläche des Verriegelungsrings (40) durch Füllschweißen gebildet ist, das in Bearbeitungsmaschinen verarbeitet wird, und durch Laserschweißen oder andere Schweißverfahren durch Anbringen geeigneter Schweißnähte auf der oberen Innenfläche des Verriegelungsrings (40) aufgebracht wird, um sicherzustellen, dass die Backe (10) mit dem Verriegelungsring (40) miteinander verbunden ist.

6. Formanordnung nach Anspruch 1, **dadurch gekennzeichnet, dass** sie eine Hohlraumschweißfläche (22) mit konischer Form umfasst, die auf der oberen Innenfläche des Hohlraums (20) mittels Füllschweißen gebildet ist, das in Bearbeitungsmaschinen verarbeitet wird und durch ein Laserschweißgerät oder andere Schweißverfahren durch Anbringen geeigneter Schweißnähte auf die obere Innenfläche des Hohlraums (20) aufgebracht wird, um sicherzustellen, dass die Backe (10) mit dem Hohlraum (20) miteinander verbunden ist.

## Revendications

1. Assemblage de moules utilisé dans l'industrie de production de préformes PET par injection plastique,
comprenant
- la mâchoire (10), qui est située sur le moule d'injection pour former l'embouchure de la préforme PET, comprend un renflement circulaire (11) sur sa surface inférieure, s'étendant vers le haut et vers le bas conformément à la structure de l'embouchure de la préforme PET, elle comprend en outre un canal de mâchoire (12) sous la forme d'un renfoncement vers l'intérieur autour du bord extérieur des renflements (11), **caractérisé par**,
- le premier anneau conique de la mâchoire (70) située dans le canal de mâchoire (12) sur un côté de la mâchoire (10) et dont la surface extérieure est de forme conique,
- le second anneau conique (80) est situé à l'intérieur du canal de la mâchoire (12) de l'autre côté de la mâchoire (10) et sa surface extérieure est de forme conique,
- la cavité (20), qui est verrouillée sur le côté de la mâchoire (10) lorsque le premier anneau conique de la mâchoire (70) se trouve sur ce côté, au moyen de l'anneau de la cavité (50) connecté au canal de la cavité (21) situé sur sa surface supérieure et formant la paroi extérieure de la préforme PET,
- l'anneau de verrouillage (40), qui est verrouillé sur le côté de la mâchoire (10) où le second anneau de mâchoire conique (80) se trouve sur ledit côté, au moyen de l'anneau central (60) relié au canal de verrouillage (41) situé sur sa surface supérieure,
- le noyau (30) est relié à l'anneau de verrouillage (40) et forme la paroi intérieure de la préforme PET.

2. Assemblage de moule selon la revendication 1, **caractérisé en ce qu'**il comprend le premier anneau de mâchoire conique (70) ayant une surface extérieure conique, qui permet à la cavité (20) d'être verrouillée à la mâchoire (10) en étant encastrée dans l'anneau de la cavité (50) avec une surface intérieure conique.

3. Assemblage de moule selon la revendication 1, **caractérisé en ce qu'**il comprend le second anneau de mâchoire conique (80) ayant une surface extérieure conique, qui permet à l'anneau de verrouillage (40) d'être verrouillée à la mâchoire (10) en étant encastrée dans l'anneau de la cavité (60) avec une surface intérieure conique.

4. Assemblage de moule selon la revendication 1, **caractérisé par le fait qu'**il comprend une surface de soudage de mâchoires (13) de forme conique, qui est formée sur la surface extérieure de les renflements (11) au moyen d'un soudage d'apport effectué dans des machines d'usinage et appliqué à la surface extérieure des renflements (11) par une machine à souder au laser ou par d'autres méthodes de soudage en réalisant des joints de soudure appropriés, afin de garantir que ladite mâchoire (10) est reliée l'une à l'autre par l'anneau de verrouillage (40).

5. Assemblage de moule selon la revendication 1, **caractérisé par le fait qu'**il comprend une surface de soudage de verrouillage (42) de forme conique, qui est formé sur la surface intérieure supérieure de l'anneau de verrouillage (40) au moyen du soudage d'apport effectué dans des machines d'usinage et appliqué sur la surface intérieure supérieure de l'anneau de verrouillage (40) au moyen d'une machine de soudage au laser ou d'autres méthodes de soudage en réalisant des joints de soudure appropriés, afin de s'assurer que ladite mâchoire (10) est reliée l'une à l'autre par l'anneau de verrouillage (40).

6. Assemblage de moule selon la revendication 1, **caractérisé par le fait qu'**il comprend une surface de soudage des cavités (22) de forme conique, qui est formé sur la surface intérieure supérieure de la cavité (20) au moyen du soudage d'apport effectué dans des machines d'usinage et appliqué sur la surface intérieure supérieure de la cavité (20) au moyen d'une machine de soudage au laser ou d'autres méthodes de soudage en réalisant des joints de soudure appropriés, afin de s'assurer que ladite mâchoire (10) est reliée l'une à l'autre par la cavité (20).
